# FASCICULE DE BREVET EUROPEEN

(11) **EP 3 539 878 B1**
(45) Date de publication et mention de la délivrance du brevet: **22.07.2020**
(21) Numéro de dépôt: 19156324.6
(22) Date de dépôt: 11.02.2019
(51) Int. Cl.: B64D 29/02, F02K 1/72, B64D 29/04, F02K 1/62

(54) **TURBOREACTEUR COMPORTANT UNE NACELLE EQUIPEE D'UN CARTER DE SOUFFLANTE ET D'UNE STRUCTURE FIXE**
TURBOTRIEBWERK, DAS EINE GONDEL UMFASST, DIE MIT EINEM GEBLÄSEGEHÄUSE UND EINER FESTEN STRUKTUR AUSGESTATTET IST
TURBINE ENGINE COMPRISING A NACELLE PROVIDED WITH A FAN COWL AND A STATIONARY STRUCTURE

(30) Priorité: 13.03.2018 FR 1852170
(43) Date de publication de la demande: 18.09.2019
(73) Titulaire: Airbus Operations S.A.S., 31060 Toulouse (FR)
(72) Inventeur: RIDRAY, Frédéric, 32600 L'ISLE JOURDAIN (FR); PIARD, Frédéric, 31170 TOURNEFEUILLE (FR); GARDES, Pascal, 31530 LEVIGNAC (FR); GONCALVES, José, 31770 COLOMIERS (FR)
(74) Mandataire: Gicquel, Olivier Yves Gérard

(56) Documents cités:
- EP-A1- 2 863 038
- EP-A2- 1 852 595
- WO-A1-2011/124793
- WO-A2-2014/007875
- FR-A1- 2 824 598
- FR-A1- 2 987 600

## Description

La présente invention concerne un turboréacteur double flux qui comporte une nacelle équipée d'un carter de soufflante et d'une structure fixe supportant un ensemble mobile qui se déplace en translation par rapport à la structure fixe, ainsi qu'un aéronef comportant au moins un tel turboréacteur double flux.

Un aéronef comporte un fuselage de chaque côté duquel est fixée une aile. Sous chaque aile est suspendu au moins un turboréacteur double flux. Chaque turboréacteur double flux est fixé sous l'aile par l'intermédiaire d'un mât qui est fixé entre la structure de l'aile et la structure du turboréacteur double flux.

La nacelle comporte un carter de soufflante qui est agencé autour de la soufflante et du moteur. La nacelle comporte également un ensemble mobile qui se déplace de l'avant vers l'arrière pour libérer une fenêtre entre la veine secondaire et l'extérieur.

L'ensemble mobile porte également des volets intérieurs où chacun est mobile pour prendre une position déployée dans laquelle il se positionne en travers de la veine secondaire pour dévier le flux secondaire vers l'extérieur à travers la fenêtre.

L'ensemble mobile se déplace sur une structure fixe qui est elle-même fixée autour du carter de soufflante.

L'ensemble mobile porte également une rampe, fixée à la structure fixe, qui permet de diriger le flux secondaire. Cette rampe est également appelée « Fan ramp » en terminologie anglo-saxonne.

Pour des raisons de simplification structurelles, il est nécessaire de trouver des solutions optimales pour fixer la structure fixe et la rampe.

Un objet de la présente invention est de proposer un turboréacteur double flux qui comporte une nacelle équipée d'un carter de soufflante et d'une structure fixe sur laquelle se déplace un ensemble mobile et où la fixation de la structure fixe est optimisée.

A cet effet, est proposé un turboréacteur double flux tel que revendiqué dans la revendication 1.

Un tel turboréacteur permet une simplification de l'assemblage et permet entre autres de fixer la rampe directement à la virole extérieure.

Des turboréacteurs double flux avec une nacelle et un ensemble mobile sont connus dans l'art.

Par exemple dans la demande de brevet WO2014/007875, le turboréacteur comporte un moteur et une nacelle qui est fixée autour du moteur et qui délimite entre eux une veine secondaire.

EP2863038 divulgue une rampe de soufflante d'un inverseur de poussée avec poche pour une porte de blocage. FR2824598 divulgue un dispositif de ventilation d'une nacelle du corps d'un turboréacteur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 est une vue de côté d'un aéronef comportant un turboréacteur double flux selon l'invention,
la Fig. 2 est une vue de devant et en perspective du turboréacteur double flux selon l'invention,
la Fig. 3 est une vue de derrière et en perspective du turboréacteur double flux de la Fig. 2,
la Fig. 4 est une vue en coupe du turboréacteur double flux selon la ligne IV-IV de la Fig. 3,
la Fig. 5 est une vue en perspective de la fixation au niveau de la poutre 3 heures,
la Fig. 6 est une vue en perspective de la fixation au niveau de la poutre 12 heures,
la Fig. 7 est une vue en perspective de la fixation au niveau de la poutre 6 heures,
la Fig. 8 est une vue en perspective d'un exemple d'une poutre 12 heures, et
la Fig. 9 montre une vue en perspective d'un exemple d'une poutre 6 heures.

Dans la description qui suit, les termes relatifs à une position sont pris en référence au sens d'avancement de l'aéronef qui se déplace en avant.

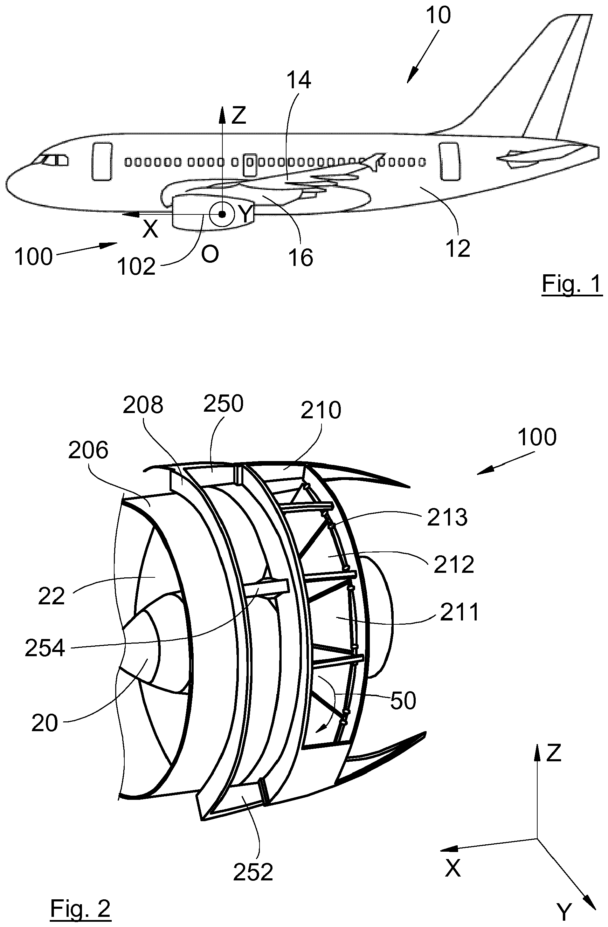

La Fig. 1 montre un aéronef 10 qui comporte un fuselage 12 de chaque côté duquel est fixée une aile 14 qui porte au moins un turboréacteur double flux 100 selon l'invention. La fixation du turboréacteur double flux 100 sous l'aile 14 s'effectue par l'intermédiaire d'un mât 16.

Le turboréacteur double flux 100 présente une nacelle 102.

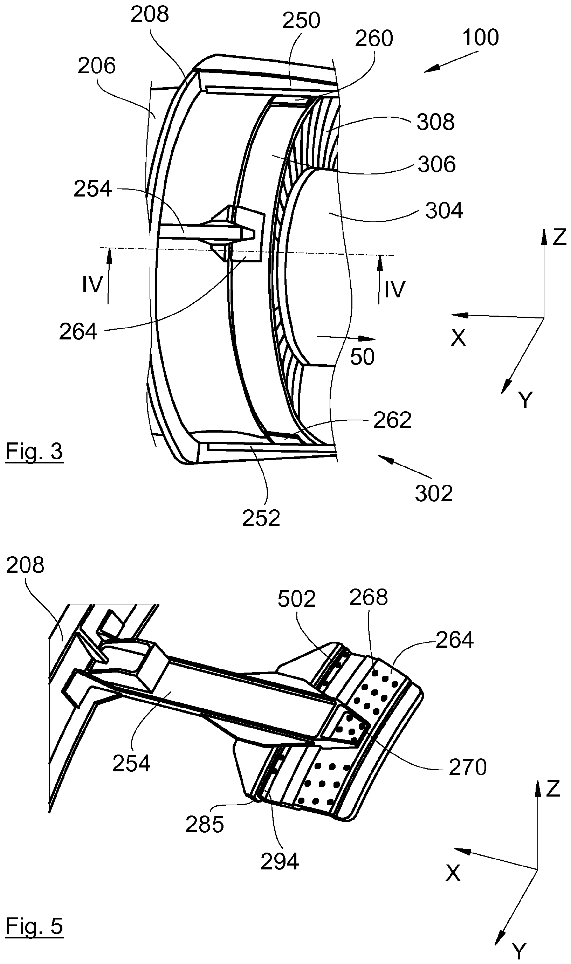

La Fig. 2 et la Fig. 3 montrent le turboréacteur double flux 100 qui présente également un moteur 20 qui est logé à l'intérieur de la nacelle 102.

La nacelle 102 comporte un carter de soufflante 206 agencé autour du moteur 20. Le moteur 20 est matérialisé sur la Fig. 2 par son cône avant et sa soufflante 22 logée à l'intérieur du carter de soufflante 206 au niveau de l'entrée d'air de la nacelle 102.

Dans la description qui suit, et par convention, on appelle X l'axe longitudinal du turboréacteur double flux 100 qui est parallèle à l'axe longitudinal de l'aéronef 10 et orienté positivement vers l'avant de l'aéronef 10, on appelle Y l'axe transversal qui est horizontal lorsque l'aéronef est au sol, et Z l'axe vertical lorsque l'aéronef est au sol, ces trois directions X, Y et Z étant orthogonales entre elles.

Une veine secondaire dans laquelle circule un flux secondaire 50 est délimitée entre le moteur 20 et la nacelle 102, et plus particulièrement entre le carter de soufflante 206 et le moteur 20.

Lorsque le turboréacteur double flux 100 fonctionne, une masse d'air est aspirée par l'entrée d'air puis expulsée à l'arrière par la soufflante 22. La masse d'air est divisée, d'amont en aval selon une direction d'un flux d'air traversant le turboréacteur double flux 100 et sensiblement parallèle à l'axe longitudinal X, en un flux primaire, qui circule dans une veine d'air primaire, et en un flux secondaire 50, qui est concentrique avec le flux primaire et circule dans la veine secondaire, ou conduit de soufflante. Les deux veines sont séparées par une interveine.

Le flux primaire traverse d'amont en aval par rapport au flux d'air, les différents éléments du moteur, à savoir un étage de compresseurs, comprenant par exemple un compresseur basse pression et un compresseur haute pression en aval du compresseur basse pression, une chambre de combustion, un étage de turbines, comprenant par exemple une turbine haute pression et une turbine basse pression en aval de la turbine haute pression.

Des carters structuraux sont montés autour des éléments du turboréacteur double flux 100 et permettent de le rigidifier afin notamment de limiter ses distorsions en fonctionnement.

Ainsi, la soufflante 22 est carénée par le carter de soufflante 206 (« carter fan » en terminologie anglo-saxonne) et les éléments du moteur 20 sont entourés, d'amont en aval, par un carter de compresseur basse pression qui entoure le compresseur basse pression, un carter de compresseur haute pression qui entoure le compresseur haute pression, puis un carter moteur, dit carter « core-turbine » en langage aéronautique qui entoure la chambre de combustion et les turbines haute pression et basse pression.

Le turboréacteur double flux 100 comprend en outre un carter intermédiaire 302 ayant une partie formant un moyeu 304 et une virole extérieure 306 qui est cylindrique et radialement espacée du moyeu 304 par la veine secondaire et fixée au moyeu 304 via des bras 308 (« outlet guide vanes » ou « OGV » en terminologie anglo-saxonne) qui permettent de redresser le flux secondaire 50.

La virole extérieure 306 est également appelée « OGV ring » en terminologie anglo-saxonne.

La virole extérieure 306 est située en arrière et en continuité du carter de soufflante 206 et prolonge ce dernier pour délimiter extérieurement la veine secondaire tandis que la partie extérieure du moyeu 304 délimite intérieurement la veine secondaire.

Le turboréacteur double flux 100 présente une structure fixe 208 qui est fixée à la virole extérieure 306 et qui porte un ensemble mobile 210 (visible uniquement sur la Fig. 2).

L'ensemble mobile 210 qui prend ici la forme d'un demi-cylindre ajouré à bâbord et d'un demi-cylindre ajouré à tribord (non vu sur la Fig. 2), est monté mobile en translation selon une direction de translation parallèle à l'axe longitudinal X entre une position avancée et une position reculée. En position reculée, l'ensemble mobile 210 est déplacé vers l'arrière de la nacelle 102 de manière à libérer une fenêtre 211 entre la veine secondaire et l'extérieur de la nacelle 102. En position avancée, la fenêtre 211 est obturée par les éléments constituant l'ensemble mobile 210.

L'ensemble mobile 210 porte des volets intérieurs 212 où chacun est mobile entre une position rentrée dans laquelle le volet intérieur 212 est en dehors de la veine secondaire et une position déployée dans laquelle le volet intérieur 212 se positionne en travers de la veine secondaire pour dévier le flux secondaire 50 vers l'extérieur à travers la fenêtre 211. En position déployée, les volets intérieurs 212 sont orientés vers le moteur 20.

Les volets intérieurs 212 sont en position rentrée lorsque l'ensemble mobile 210 est en position avancée, et les volets intérieurs 212 ne peuvent prendre la position déployée que lorsque l'ensemble mobile 210 est en position reculée.

Pour aider à diriger le flux secondaire 50 traversant la fenêtre 211 vers l'avant de l'aéronef 10, des volets extérieurs (non représentés ici) peuvent également être montés sur l'ensemble mobile 210. Ces volets extérieurs fonctionnent comme les volets intérieurs 212 en se déployant vers l'extérieur.

Chaque volet intérieur ou extérieur est articulé par son bord arrière à l'ensemble mobile 210 sur des charnières 213 tandis que le bord libre opposé se positionne vers l'avant en position rentrée et vers le moteur 20 en position déployée pour les volets intérieurs 212 et vers l'extérieur en position déployée pour les volets extérieurs.

Des cascades peuvent également être mises en place en travers de la fenêtre 211.

L'ensemble mobile 210 n'est pas décrit plus en détail car il est connu de l'homme du métier et peut prendre différentes formes.

Le déplacement de l'ensemble mobile 210 est réalisé par tous moyens appropriés, comme par exemple des vérins ou des vis à billes. De la même manière, les déplacements des volets intérieurs et extérieurs sont assurés par tous moyens appropriés, comme par exemple des vérins ou des vis à billes.

La structure fixe 208 est fixée à la virole extérieure 306 par une poutre 12 heures 250, une poutre 6 heures 252, une poutre 3 heures 254 et une poutre 9 heures non visible mais identique à la poutre 3 heures 254. Chaque poutre s'étend parallèlement à l'axe longitudinal X.

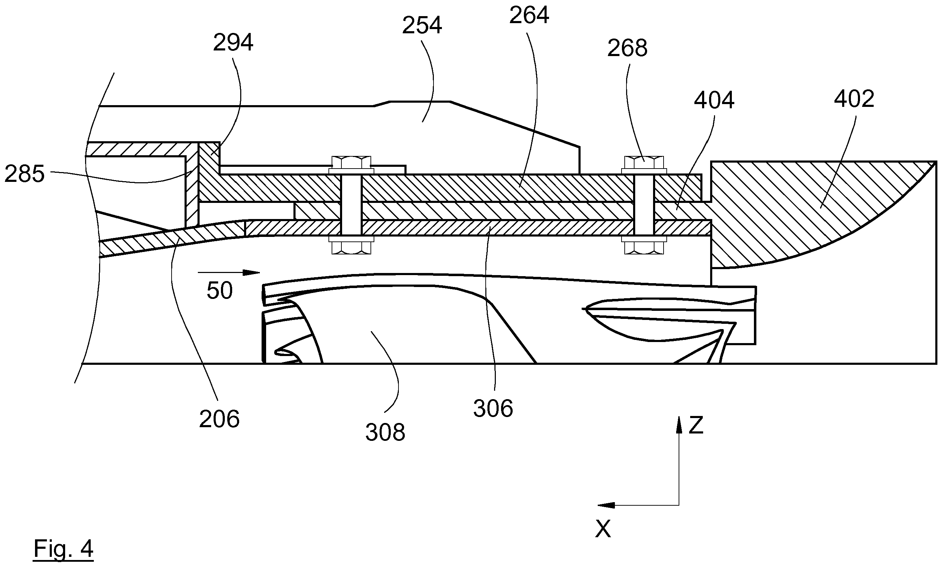

Comme le montre la Fig. 4, le turboréacteur double flux 100 comporte également une rampe 402 (« Fan ramp ») qui oriente le flux secondaire 50 en sortie de la virole extérieure 306 et la rampe 402 est fixée à la virole extérieure 306. La rampe 402 prend globalement la forme d'un cône s'élargissant en sortie de la virole extérieure 306.

La fixation de la rampe 402 et de la structure fixe 208 à la virole extérieure 306 permet un gain de place par réduction du nombre de composants et donc une réduction de l'épaisseur de la nacelle 102, ce qui améliore l'aérodynamisme.

En outre, dans la mesure où la rampe 402 n'est plus fixée à l'ensemble mobile, il est possible d'accoler la rampe 402 juste à l'arrière de la virole extérieure 306 sans qu'il soit nécessaire de prévoir un jeu de fonctionnement important.

La rampe 402 présente une jupe 404 qui est disposée autour de la virole extérieure 306 afin d'y être fixée, ici grâce à des éléments de visserie 268 tels que des boulons.

Chaque poutre 250, 252, 254, présente une première extrémité qui est fixée à la structure fixe 208, ici l'extrémité orientée vers l'avant, et une deuxième extrémité qui est fixée à la virole extérieure 306, ici l'extrémité orientée vers l'arrière.

La deuxième extrémité de chaque poutre 250, 252, 254 est fixée à la virole extérieure 306, par l'intermédiaire d'une ferrure 260, 262, 264 fixée, d'une part, à la deuxième extrémité, et, d'autre part, à la virole extérieure 306.

La jupe 404 est disposée entre la virole extérieure 306 et chaque ferrure 260, 262, 264 afin d'être prise en sandwich entre elles et être ainsi maintenue.

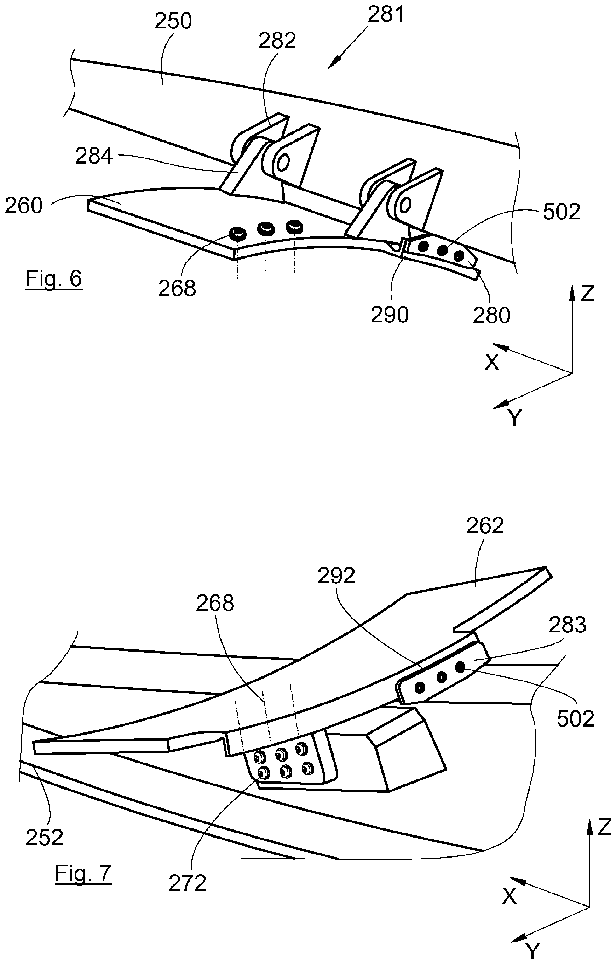

Afin d'assurer la fixation de chaque ferrure 260, 262, 264 à la virole extérieure 306, des boulons de serrage 268 sont prévus pour serrer la ferrure 260, 262, 264 et la virole extérieure 306 en serrant la jupe 404 entre elles. Les boulons de serrage 268 sont représentés sur les Figs. 5 et 6 et sont uniquement schématisés par leurs axes sur la Fig. 7. Les axes des boulons de serrage 268 sont radiaux par rapport à la virole extérieure 306.

Dans le mode de réalisation de l'invention présenté à la Fig. 5, la fixation de la poutre 3 heures 254 et de la poutre 9 heures avec la ferrure 264 est assurée par des éléments de visserie 270 tels que des boulons et dont les axes sont radiaux par rapport à la virole extérieure 306.

Dans le mode de réalisation de l'invention présenté à la Fig. 6, la fixation de la poutre 12 heures 250 avec la ferrure 260 est assurée par une liaison pivot 281 dont l'axe est parallèle à l'axe longitudinal X et qui est réalisée ici par deux chapes 282 solidaires de la poutre 12 heures 250, chacune recevant une plaque percée 284 solidaire de la ferrure 260.

Dans le mode de réalisation de l'invention présenté à la Fig. 7, la fixation de la poutre 6 heures 252 avec la ferrure 262 est assurée par des éléments de visserie 272 tels que des boulons et dont les axes sont parallèles à l'axe transversal Y.

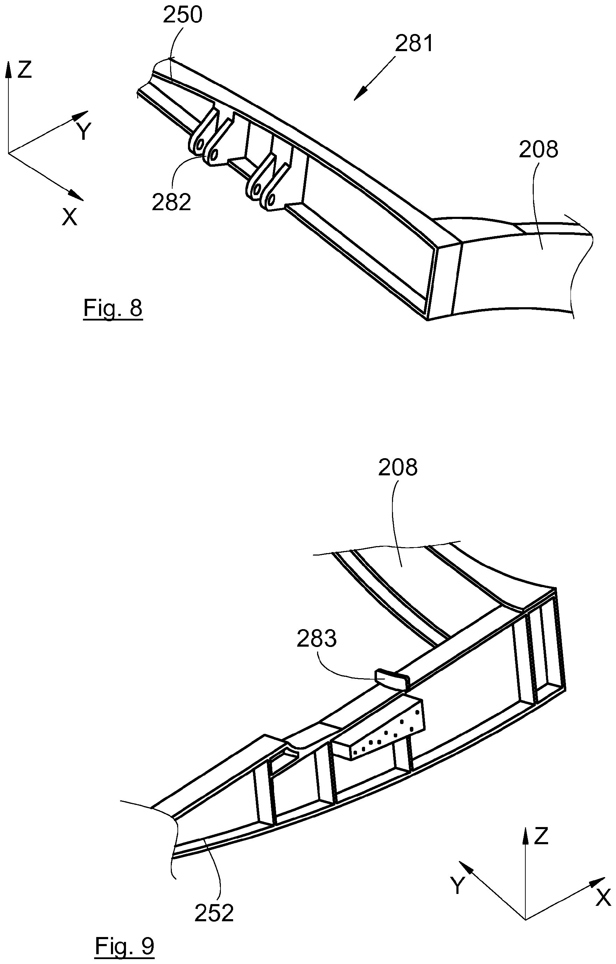

Les Figs. 8 et 9 montrent les poutres 12 heures 250 et 6 heures 252 en position par rapport à la structure fixe 208 et sans les ferrures 260, 262.

Chaque poutre 250, 252, 254 est équipée d'une butée 280, 283, 285 formant un plan perpendiculaire à l'axe longitudinal X et chaque ferrure 260, 262, 264 présente une contrebutée 290, 292, 294 qui forme également un plan perpendiculaire à l'axe longitudinal X et qui est en appui contre la butée 280, 283, 285 de la poutre 250, 252, 254 associée, afin de bloquer la rotation autour de l'axe vertical Z, ainsi qu'un arrêt selon l'axe longitudinal X pour une reprise des efforts axiaux.

Des vis 502 assurent la fixation des contrebutées 290, 292 et 294 contre les butées 280, 283 et 285.

L'implantation particulière des éléments de fixation entre les poutres, les ferrures et la virole extérieure 306, ainsi que celle des butées et contrebutées permettent de compenser les efforts transmis depuis le moteur 20.

L'invention a été plus particulièrement décrite dans le cas d'une nacelle sous une aile mais elle peut s'appliquer à une nacelle située à l'arrière du fuselage.

## Revendications

1. Turboréacteur double flux (100) comportant :
- un moteur (20),
- une structure fixe (208),
- une nacelle (102) entourant le moteur (20) et comportant un carter de soufflante (206), où une veine d'un flux secondaire (50) est délimitée entre le carter de soufflante (206) et le moteur (20) et dans laquelle un flux d'air circule,
- un ensemble mobile (210) monté mobile en translation sur la structure fixe (208) selon une direction de translation entre une position reculée dans laquelle l'ensemble mobile (210) est déplacé vers l'arrière de manière à libérer une fenêtre (211) entre la veine secondaire et l'extérieur, et une position avancée dans laquelle la fenêtre (211) est obturée par l'ensemble mobile (210),
- une rampe (402) destinée à orienter le flux secondaire (50),
- un carter intermédiaire (302) ayant une partie formant un moyeu (304), **caractérisé en ce que** le carter intermédiaire (302) comprend une virole extérieure (306) à laquelle est fixée la structure fixe (208), ladite virole étant radialement espacée du moyeu (304) par la veine secondaire et fixée au moyeu (304) via des bras (308) et est située en arrière et en continuité du carter de soufflante (206),
et **en ce que** la rampe (402) est fixée à la virole extérieure (306) pour orienter le flux secondaire (50) en sortie de la virole extérieure (306).

2. Turboréacteur double flux (100) selon la revendication 1, **caractérisé en ce que** la rampe (402) présente une jupe (404) qui est disposée autour de la virole extérieure (306).

3. Turboréacteur double flux (100) selon l'une des revendications 1 ou 2, **caractérisé en ce qu'**il comporte une poutre 12 heures (250), une poutre 6 heures (252), une poutre 3 heures (254) et une poutre 9 heures, où chaque poutre présente une première extrémité qui est fixée à la structure fixe (208) et une deuxième extrémité qui est fixée à la virole extérieure (306).

4. Turboréacteur double flux (100) selon la revendication 3, **caractérisé en ce que** la deuxième extrémité de chaque poutre (250, 252, 254) est fixée à la virole extérieure (306), par l'intermédiaire d'une ferrure (260, 262, 264) fixée, d'une part, à la deuxième extrémité, et, d'autre part, à la virole extérieure (306).

5. Turboréacteur double flux (100) selon la revendication 4, **caractérisé en ce que** lorsque la rampe (402) présente une jupe (404) qui est disposée autour de la virole extérieure (306), la jupe (404) est prise en sandwich entre la virole extérieure (306) et chaque ferrure (260, 262, 264), et le turboréacteur double flux (100) comporte des boulons de serrage (268) pour serrer la ferrure (260, 262, 264) contre la virole extérieure (306).

6. Turboréacteur double flux (100) selon l'une des revendications 4 à 5, **caractérisé en ce que** la fixation de la poutre 3 heures (254) et de la poutre 9 heures avec la ferrure (264) est assurée par des éléments de visserie (270) dont les axes sont radiaux par rapport à la virole extérieure (306).

7. Turboréacteur double flux (100) selon l'une des revendications 4 à 6, **caractérisé en ce que** la fixation de la poutre 12 heures (250) avec la ferrure (260) est assurée par une liaison pivot (281) dont l'axe est parallèle à un axe longitudinal X du turboréacteur double flux (100).

8. Turboréacteur double flux (100) selon l'une des revendications 4 à 7, **caractérisé en ce que** la fixation de la poutre 6 heures (252) avec la ferrure (262) est assurée par des éléments de visserie (272) dont les axes sont parallèles à un axe transversal Y du turboréacteur double flux (100).

9. Turboréacteur double flux (100) selon l'une des revendications 4 à 8, **caractérisé en ce que** chaque poutre (250, 252, 254) est équipée d'une butée (280, 283, 285) formant un plan perpendiculaire à un axe longitudinal X du turboréacteur double flux (100) et **en ce que** chaque ferrure (260, 262, 264) présente une contrebutée (290, 292, 294) formant un plan perpendiculaire à l'axe longitudinal X en appui contre la butée (280, 283, 285) de la poutre (250, 252, 254) associée.

10. Aéronef (10) comportant au moins un turboréacteur double flux (100) selon l'une des revendications précédentes.

## Patentansprüche

1. Mantelstromtriebwerk (100), welches umfasst:
- ein Triebwerk (20),
- eine feste Struktur (208),
- eine Gondel (102), die das Triebwerk (20) umgibt und ein Gebläsegehäuse (206) umfasst, wobei ein Strömungskanal eines Sekundärstroms (50) zwischen dem Gebläsegehäuse (206) und dem Triebwerk (20) begrenzt wird, und in welcher ein Luftstrom strömt,
- eine bewegliche Anordnung (210), die an der festen Struktur (208) translatorisch beweglich in einer Translationsrichtung zwischen einer zurückgezogenen Position, in welcher die bewegliche Anordnung (210) nach hinten verschoben ist, so dass sie ein Fenster (211) zwischen dem sekundären Strömungskanal und der Außenseite freigibt, und einer vorgeschobenen Position, in welcher das Fenster (211) durch die bewegliche Anordnung (210) verschlossen ist, angebracht ist,
- eine Rampe (402), die dazu bestimmt ist, den Sekundärstrom (50) auszurichten,
- ein Zwischengehäuse (302), das einen Teil aufweist, der eine Nabe (304) bildet,
**dadurch gekennzeichnet, dass** das Zwischengehäuse (302) einen äußeren Ring (306) umfasst, an welchem die feste Struktur (208) befestigt ist, wobei der Ring von der Nabe (304) durch den sekundären Strömungskanal radial beabstandet ist und an der Nabe (304) über Arme (308) befestigt ist und sich hinter dem Gebläsegehäuse (206) befindet und in dieses übergeht,
und dadurch, dass die Rampe (402) am äußeren Ring (306) befestigt ist, um den Sekundärstrom (50) am Auslass des äußeren Ringes (306) auszurichten.

2. Mantelstromtriebwerk (100) nach Anspruch 1, **dadurch gekennzeichnet, dass** die Rampe (402) eine Schürze (404) aufweist, welche um den äußeren Ring (306) herum angeordnet ist.

3. Mantelstromtriebwerk (100) nach einem der Ansprüche 1 oder 2, **dadurch gekennzeichnet, dass** es einen Träger in der 12-Uhr-Position (250), einen Träger in der 6-Uhr-Position (252), einen Träger in der 3-Uhr-Position (254) und einen Träger in der 9-Uhr-Position aufweist, wobei jeder Träger ein erstes Ende aufweist, welches an der festen Struktur (208) befestigt ist, und ein zweites Ende, welches an dem äußeren Ring (306) befestigt ist.

4. Mantelstromtriebwerk (100) nach Anspruch 3, **dadurch gekennzeichnet, dass** das zweite Ende jedes Trägers (250, 252, 254) an dem äußeren Ring (306) über einen Beschlag (260, 262, 264) befestigt ist, der einerseits an dem zweiten Ende und andererseits an dem äußeren Ring (306) befestigt ist.

5. Mantelstromtriebwerk (100) nach Anspruch 4, **dadurch gekennzeichnet, dass**, wenn die Rampe (402) eine Schürze (404) aufweist, welche um den äußeren Ring (306) herum angeordnet ist, die Schürze (404) sandwichartig zwischen dem äußeren Ring (306) und jedem Beschlag (260, 262, 264) angeordnet ist und das Mantelstromtriebwerk (100) Spannbolzen (268) umfasst, um den Beschlag (260, 262, 264) gegen den äußeren Ring (306) zu drücken.

6. Mantelstromtriebwerk (100) nach einem der Ansprüche 4 bis 5, **dadurch gekennzeichnet, dass** die Befestigung des Trägers in der 3-Uhr-Position (254) und des Trägers in der 9-Uhr-Position an dem Beschlag (264) durch Verschraubungselemente (270) sichergestellt ist, deren Achsen radial in Bezug auf den äußeren Ring (306) verlaufen.

7. Mantelstromtriebwerk (100) nach einem der Ansprüche 4 bis 6, **dadurch gekennzeichnet, dass** die Befestigung des Trägers in der 12-Uhr-Position (250) an dem Beschlag (260) durch eine Drehzapfenverbindung (281) sichergestellt ist, deren Achse parallel zu einer Längsachse X des Mantelstromtriebwerks (100) ist.

8. Mantelstromtriebwerk (100) nach einem der Ansprüche 4 bis 7, **dadurch gekennzeichnet, dass** die Befestigung des Trägers in der 6-Uhr-Position (252) an dem Beschlag (262) durch Verschraubungselemente (272) sichergestellt ist, deren Achsen parallel zu einer Querachse Y des Mantelstromtriebwerks (100) sind.

9. Mantelstromtriebwerk (100) nach einem der Ansprüche 4 bis 8, **dadurch gekennzeichnet, dass** jeder Träger (250, 252, 254) mit einem Anschlag (280, 283, 285) ausgestattet ist, der eine zu einer Längsachse X des Mantelstromtriebwerks (100) senkrechte Ebene bildet, und dadurch, dass jeder Beschlag (260, 262, 264) einen Gegenanschlag (290, 292, 294) aufweist, der eine zu der Längsachse X senkrechte Ebene bildet und an dem Anschlag (280, 283, 285) des zugeordneten Trägers (250, 252, 254) anliegt.

10. Luftfahrzeug (10), welches mindestens ein Mantelstromtriebwerk (100) nach einem der vorhergehenden Ansprüche umfasst.

## Claims

1. Turbofan engine (100) having:
- an engine (20),
- a fixed structure (208),
- a nacelle (102) enclosing the engine (20) and having a fan casing (206), wherein a secondary-flow duct (50) is delimited between the fan casing (206) and the engine (20), an air flow circulating in said secondary-flow duct (206),
- a movable assembly (210) mounted on the fixed structure (208) so as to be able to move in translation in a direction of movement between a retracted position, in which the movable assembly (210) has been moved towards the rear so as to open up a gap (211) between the secondary duct and the outside, and an extended position, in which the gap (211) is closed off by the movable assembly (210),
- a ramp (402) intended to orient the secondary flow (50),
- an intermediate casing (302) having a part forming a hub (304),
**characterized in that** the intermediate casing (302) comprises an outer shell (306) to which the fixed structure (208) is fixed, said shell being radially spaced apart from the hub (304) by the secondary duct and fixed to the hub (304) via arms (308) and being situated behind and in the continuation of the fan casing (206),
and **in that** the ramp (402) is fixed to the outer shell (306) so as to orient the secondary flow (50) at the outlet of the outer shell (306).

2. Turbofan engine (100) according to Claim 1, **characterized in that** the ramp (402) has a skirt (404) disposed around the outer shell (306).

3. Turbofan engine (100) according to either of Claims 1 and 2, **characterized in that** it has a 12 o'clock beam (250), a 6 o'clock beam (252), a 3 o'clock beam (254) and a 9 o'clock beam, wherein each beam has a first end fixed to the fixed structure (208) and a second end fixed to the outer shell (306).

4. Turbofan engine (100) according to Claim 3, **characterized in that** the second end of each beam (250, 252, 254) is fixed to the outer shell (306) via a fitting (260, 262, 264) fixed, on one side, to the second end and, on the other side, to the outer shell (306).

5. Turbofan engine (100) according to Claim 4, **characterized in that** when the ramp (402) has a skirt (404) disposed around the outer shell (306), the skirt (404) is sandwiched between the outer shell (306) and each fitting (260, 262, 264), and the turbofan engine (100) has clamping bolts (268) for clamping the fitting (260, 262, 264) against the outer shell (306).

6. Turbofan engine (100) according to either of Claims 4 and 5, **characterized in that** the 3 o'clock beam (254) and the 9 o'clock beam are fixed to the fitting (264) by screw-fastening elements (270), the axes of which are radial with respect to the outer shell (306).

7. Turbofan engine (100) according to one of Claims 4 to 6, **characterized in that** the 12 o'clock beam (250) is fixed to the fitting (260) by a pivot link (281), the axis of which is parallel to a longitudinal axis X of the turbofan engine (100).

8. Turbofan engine (100) according to one of Claims 4 to 7, **characterized in that** the 6 o'clock beam (252) is fixed to the fitting (262) by screw-fastening elements (272), the axes of which are parallel to a transverse axis Y of the turbofan engine (100).

9. Turbofan engine (100) according to one of Claims 4 to 8, **characterized in that** each beam (250, 252, 254) is equipped with a stop (280, 283, 285) forming a plane perpendicular to a longitudinal axis X of the turbofan engine (100), and **in that** each fitting (260, 262, 264) has a counter-stop (290, 292, 294) forming a plane perpendicular to the longitudinal axis X in abutment against the stop (280, 283, 285) of the associated beam (250, 252, 254).

10. Aircraft (10) having at least one turbofan engine (100) according to one of the preceding claims.
